# EUROPÄISCHE PATENTSCHRIFT

(11) **EP 0 511 326 B1**
(45) Veröffentlichungstag und Bekanntmachung des Hinweises auf die Patenterteilung: **15.11.1995**
(21) Anmeldenummer: 91915023.5
(22) Anmeldetag: 26.08.1991
(51) Int. Cl.: B60T 8/50, B60T 8/44, B60T 8/48

(54) **BREMSDRUCKREGELVORRICHTUNG**
BRAKE-PRESSURE CONTROL SYSTEM
DISPOSITIF DE REGULATION DE LA PRESSION DE FREINAGE

(30) Priorität: 16.11.1990 DE 4036583
(43) Veröffentlichungstag der Anmeldung: 04.11.1992
(73) Patentinhaber: ITT Automotive Europe GmbH, 60488 Frankfurt (DE)
(72) Erfinder: BECK, Erhard, D-6290 Weilburg (DE)
(86) Internationale Anmeldenummer: EP9101621
(87) Internationale Veröffentlichungsnummer: WO9208632

(56) Entgegenhaltungen:
- EP-A- 202 845
- EP-A- 242 132
- EP-A- 361 336

## Beschreibung

Die Erfindung betrifft eine Bremsdruckregelvorrichtung, insbesondere für Kraftfahrzeuge, die mit einem Antiblockierregelsystem (ABS) und/oder einem Antriebsschlupfregelsystem (ASR) ausgerüstet ist gemäß dem Oberbegriff des Anspruchs 1.

Eine Bremsdruckregelvorrichtung der angegebenen Art (EP-A-0 202 845) weist ein zwischen dem Hauptzylinder, der Radbremse und einem Auslaßventil wirksames Stromregelventil auf. Bei der gattungsbildenden Bremsdruckregelvorrichtung bedarf es zur Realisierung eines möglichst geringen Restdrucks in der Radbremse eines möglichst großen Durchlaßquerschnittes im Auslaßventil, was in bestimmten Situationen (Bremsdruckregelung auf Niedrigreibwert) eine feinfühlige Bremsdruckregelung erschweren kann.

Aus der EP-A-0 361 336 ist gleichfalls eine Bremsdruckregelvorrichtung mit einem Stromregelventil hervorgegangen, das in einer Druckmittelverbindung zwischen dem elektromagnetisch betätigbaren Auslaßventil und dem Hauptzylinder bzw. einer Hydraulikpumpe eine Festblende aufweist. Gleichwohl bedarf es zum völligen Abbau des Radbremsdruckes großer Auslaßquerschnitte, die einer feinfühligen Bremsdruckregelung widersprechen.

Der Erfindung liegt daher die Aufgabe zugrunde, eine Bremsdruckregelvorrichtung der eingangs genannten Art zu verbessern, um unter Umgehung des vorgenannten Nachteils eine möglichst feinfühlige und dennoch möglichst geringe Restdrücke in der Radbremse aufweisende Bremsdruckregelung zu realisieren.

Diese Aufgabe wird erfindungsgemäß durch die den Patentanspruch 1 kennzeichnenden Merkmale gelöst.

Somit ist mit überraschend geringem Bauaufwand eine Bremsdruckregelvorrichtung geschaffen, die durch einen verschiebbaren, mit einer Kolbenstufe versehenen Blendenkolben in Abhängigkeit des jeweils anstehenden Radzylinderdrucks günstige Druckabbaugradienten ermöglicht, wobei durch entsprechende Ausbildung der Regelfedern eine erheblich verbesserte Ablaufsteuerung des Druckmittels auch im Tieftemperaturbetrieb gewährleistet ist.

In einer bevorzugten baulichen sowie funktionell sinnvollen Ausführungsform des Erfindungsgegenstandes ist der in der Kolbenstufe integrierte Schließkörper unmittelbar von der ersten Feder geringer Steifigkeit kontaktiert, während die zweite Feder mit größerer Steifigkeit entgegengesetzt zur Wirkrichtung der ersten Feder im zweiten Kolben positioniert ist.

Entsprechend der weiteren Ausgestaltung des Grundgedankens ist vorgesehen, daß die Kolbenstufe auf der stirnseitig größeren Kolbenfläche von einer am Ventilgehäuse anlegbaren Regelfeder beaufschlagt wird. Damit sind regelungstechnisch günstige Druckabbaugradienten zu erzielen, sowie in Abhängigkeit von der Temperatur des Druckmittels wird eine nahezu vollständige Druckentlastung der Radbremse während der Druckabbauphase ermöglicht.

Um eine Regelung des Druckmittels in Abhängigkeit vom Radzylinderdruck zu ermöglichen, ist zweckmäßigerweise der Verbindungskanal zur Radbremse im Übergangsbereich vom größeren auf den kleineren Durchmesser der Kolbenstufe angeordnet.

Damit eine funktionsgerechte Steuerung des Druckmittelverlaufs zwischen der Radbremse und dem Auslaßventil gewährleistet ist, befindet sich der vom Hauptzylinder kommende Verbindungskanal im Bereich des großen Durchmessers der Kolbenstufe.

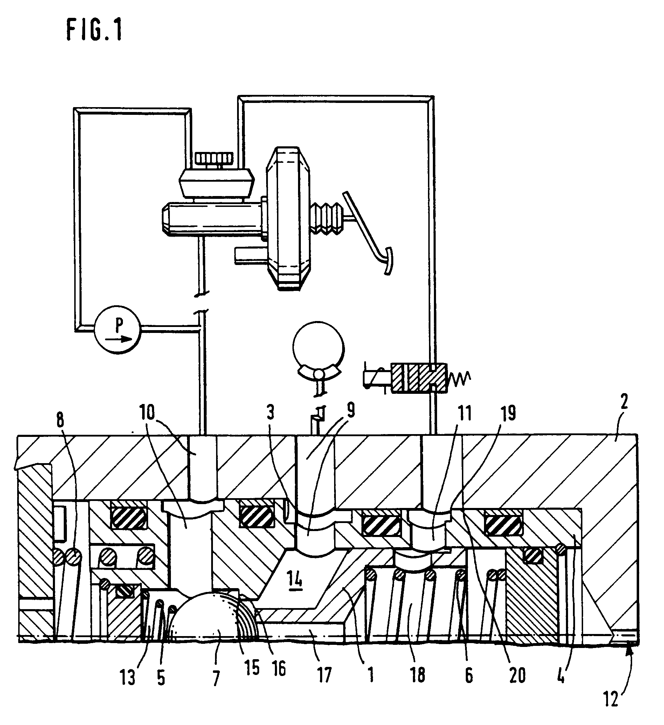

Nachfolgend wird die Erfindung anhand eines Ausführungsbeispieles gemäß der Figur 1 erläutert.

Das Ausführungsbeispiel nach Figur 1 umfaßt, wie bereits aus der Hauptanmeldung bekannt, im einzelnen zwei konzentrisch zueinander axial bewegbar angeordnete Kolben 1,4 innerhalb eines Ventilgehäuses 2. Nach dem Ausführungsbeispiel gemäß Figur 1 ist der äußere, zweite Kolben 4, wie dargestellt, als Stufenkolben ausgebildet. Der zweite Kolben 4 besitzt in der Mantelfläche die Steuer- oder Regelkante 19, die zusammen mit der radial angeordneten Regelkante im Ventilgehäuse 2 einen variablen Querschnitt der radial verlaufenden Mündung 11 zum Anschluß des Kanals 15 an das Auslaßventil bildet.

Der Verbindungskanal 9 zum Radzylinder durchdringt sowohl das Ventilgehäuse 2 wie auch den abgestuften Bereich des zweiten Kolbens 4 in einer gemeinsamen radialen Ebene. Die große Stirnfläche des äußeren, zweiten Kolbens 4 steht im Bereich der Kolbenstufe 3 unter dem Druck einer Regelfeder 8, womit der zweite Kolben 4 zunächst im nicht aktivierten Bremsenzustand in einer definierten Grundposition auf Anschlag am Ventilgehäuse 2 verharrt.

Im Normalbremsmodus ist das in seiner Gesamtheit mit 12 bezeichnete Einlaßventil offen. Die zweite, konzentrisch gegenüber den bewegten Teilen angeordnete Feder 6 drückt über den inneren, ersten Kolben 1 einen Schließkörper 7 nach links, um diesen und damit das Einlaßventil zu öffnen. Diese Offenposition wird durch die Flüssigkeitssäule zwischen dem geschlossenen Auslaßventil und dem inneren, ersten Kolben 1 im Normalbremsmodus aufrecht erhalten. Ein freies Strömen des Druckmittels von einem in der Kolbenstufe 3 eingeformten Hauptzylinderpumpendruckraum 13 zu dem zwischen dem inneren und äußeren Kolben 1,4 eingelagerten Radzylinderdruckraum 14 und damit zur Radbremse ist möglich.

Im Antiblockierregelmodus wird in der Druckabbauphase das als elektromagnetisch betätigbares, stromlos geschlossenes Ventil (SG-Ventil) ausgebildete Auslaßventil geöffnet, und zwar aufgrund eines Ausgangssignals des elektronischen Reglers des Antiblockiersytems.

Die Verbindung zum SG-Ventil wird durch einen Kanal und eine sich daran anschließende Leitung hergestellt. Der innere, erste Kolben 1 bewegt sich infolge der Druckdifferenz zwischen der Radbremse und dem Auslaßventil gegen die zweite Feder 6. Das von der ersten Feder 5 belastete Kugelventil schließt, d.h. der kugelförmige Schließkörper 7 setzt sich auf den innerhalb der Kolbenstufe 3 vorgesehenen Ventilsitz 15. Die Drossel 16, die aus einer Ausnehmung im Ventilsitz 15 besteht, wird wirksam. Damit ist bis auf Ausnahme des Drosselquerschnittes der Axialkanal 17 im ersten Kolben 1, der eine Verbindung zwischen dem Hauptzylinderdruckraum 13 und dem Auslaßraum 18 darstellen kann, geschlossen. Der äußere, zweite Kolben 4 gelangt in Abhängigkeit von dem an der Ringfläche der Kolbenstufe 3 wirksamen Radzylinderdruck gegen die Regelfeder 8 und verschiebt diesen gemäß der Abbildung nach links. Die Regelkante 19 am äußeren, zweiten Kolben 4 überfährt zwangsläufig die Regelkante 20, die am Ventilgehäuse 12 angebracht ist. Dadurch wird der über das Auslaßventil führende drucklose Rücklauf geregelt.

Folglich werden in Abhängigkeit vom jeweiligen an der Kolbenstufe 3 anstehenden Radbremsdruck die Regelkanten 19,20 des zweiten Kolbens 4 und des Ventilgehäuses 12 relativ zueinander in Überdeckung gebracht, so daß eine sensible Reglung des Radbremsdrucks im Sinne einer vollkommenen Entleerung der Radbremse gewährleistet wird. Hierdurch ist es möglich, bei höheren Raddrücken einen reglungstechnisch günstigen Druckabbau zu verwirklichen. Ferner erfolgt durch die Vervendung spezieller Materialien, z. B. Formgedächtnislegierungen oder Bimetalle für die Regelfeder ein bei tiefen Temperaturen erheblich verbesserter Abbau des relativ hohen Radrestdruckes.

### Bezugzeichenliste

- 1: erster Kolben
- 2: Ventilgehäuse
- 3: Kolbenstufe
- 4: zweiter Kolben
- 5: erste Feder
- 6: zweite Feder
- 7: Schließkörper
- 8: Regelfeder
- 9: Verbindungskanal
- 10: Verbindungskanal
- 11: Mündung
- 12: Einlaßventile
- 13: Hauptzylinderdruckraum
- 14: Radzylinderdruckraum
- 15: Ventilsitz
- 16: Drosselelement
- 17: Axialkanal
- 18: Auslaßraum
- 19: Regelkante
- 20: Regelkante

## Patentansprüche

1. Bremsdruckregelvorrichtung, insbesondere für Kraftfahrzeuge mit einem Antiblockierregelsystem (ABS) und/oder einem Antriebsschlupfregelsystem (ASR), die mit einem fluidischem, insbesondere hydraulischem Druckmittel arbeitet, bestehend aus einem Hauptzylinder, einem oder mehreren Radzylindern für Radbremsen, einem mehrere Ventilelemente umfassenden Druckmodulator für die Veränderung des hydraulischen Drucks in den Radzylindern der Radbremsen während eines Bremsdruckregelmodus, der mindestens ein Einlaßventil und mindestens ein Auslaßventil für einen Radzylinder umfaßt, mindestens eine motorgetriebene Pumpe zur Erzeugung eines fluidischen, insbesondere hydraulischen Drucks, einem elektronischen Regler, wobei im Druckmodulator eine vorzugsweise hydraulisch arbeitende Schalteinrichtung vorgesehen ist, die beim Öffnen des Auslaßventils im Regelmodus aufgrund des Druckabfalls in der Auslaßleitung des Radzylinders das Einlaßventil schließt und ein Drosselelement in der Einlaßleitung zum Radzylinder wirksam werden läßt, dadurch **gekennzeichnet,** daß ein erster Kolben (1) innerhalb eines relativ zum Ventilgehäuse (2) verschiebbaren, mit einer Kolbenstufe (3) versehenen zweiten Kolbens (4) geführt ist, wobei ein Paar im zweiten Kolben (4) fixierte Federn (5,6) den ersten Kolben (1) sowie einen im Bereich der Kolbenstufe (3) integrierten Schließkörper (7) derart kontaktieren, daß unter Wirkung der zweiten Feder (6) der Schließkörper (7) im schlupffreien Normalbremsmodus ein freies Strömen des Druckmittels vom Hauptzylinder zur Radbremse ermöglicht, daß sich der erste Kolben (1) in der Druckabbauphase eines Antiblockierregelmodus infolge der Druckdifferenz zwischen der Radbremse und dem Auslaßventil gegen die zweite Feder (6) bewegt, wodurch der Schließkörper (7) unter Wirkung der ersten Feder (5) den innerhalb der Kolbenstufe (3) vorgesehenen Ventilsitz (15) verschließt, wodurch eine Drossel (16) wirksam ist, und daß der auf die Kolbenstufe (3) wirksame Radzylinderdruck den zweiten Kolben (4) gegen die Wirkung einer Regelfeder (8) verschiebt, wodurch eine Regelkante (19) des zweiten Kolbens (4) den zum Auslaßventil führenden Druckmittelrücklauf regelt.

2. Bremsdruckregelvorrichtung nach Anspruch 1, dadurch **gekennzeichnet,** daß der im Bereich der Kolbenstufe (3) integrierte Schließkörper (7) unmittelbar von der mit geringer Steifigkeit versehenen ersten Feder (5) positioniert ist.

3. Bremsdruckregelvorrichtung nach Anspruch 1 oder 2, dadurch **gekennzeichnet,** daß die zweite Feder (6) mit größerer Steifigkeit gegenüber der ersten Feder (5) entgegengesetzt zur Wirkrichtung der ersten Feder (5) im zweiten Kolben (4) gehalten ist.

4. Bremsdruckregelvorrichtung nach einem der vorhergehenden Ansprüche, dadurch **gekennzeichnet,** daß die Kolbenstufe (3) auf der stirnseitig größeren Kolbenfläche von einer am Ventilgehäuse (2) anlegbaren Regelfeder (8) beaufschlagt ist.

5. Bremsdruckregelvorrichtung nach Anspruch 4, dadurch **gekennzeichnet,** daß die Regelfeder (8) aus einer Formgedächtnislegierung oder einem Bimetall hergestellt ist.

6. Bremsdruckregelvorrichtung nach mindestens einem der vorhergehenden Ansprüche, dadurch **gekennzeichnet,** daß ein Verbindungskanal (9) zur Radbremse im Übergangsbereich des größeren zum kleineren Durchmessers an der Kolbenstufe (3) angeordnet ist.

7. Bremsdruckregelvorrichtung nach einem der vorhergehenden Ansprüche, dadurch **gekennzeichnet,** daß die Kolbenstufe (3) im Bereich des größeren Durchmessers den Verbindungskanal (10) zum Hauptzylinder aufnimmt.

## Claims

1. A braking pressure control device, in particular for automotive vehicles equipped with an anti-lock control system (ABS) and/or a traction slip control system (TSC) operating with a fluid, in particular a hydraulic pressure medium, comprising a master cylinder, one or a plurality of wheel cylinders for wheel brakes, a pressure modulator comprising several valve elements for the variation of the hydraulic pressure in the wheel cylinders of the wheel brakes during a braking pressure control mode and being furnished with at least one inlet valve and at least one outlet valve for a wheel cylinder, at least one motor-driven pump for generating a fluid pressure, in particular a hydraulic pressure, an electronic control unit, the pressure modulator being provided with a preferably hydraulically operating switching device which, on opening of the outlet valve in the control mode, due to the pressure drop in the outlet line of the wheel cylinder, closes the inlet valve and makes a throttle element in the inlet line to the wheel cylinder become active,
**characterized** in that a first piston (1) is guided within a second piston (4) which is slidable relative to the valve housing (2) and has a piston step (3), with a pair of springs (5, 6) fixed in the second piston (4) being in contact with the first piston (1) and a closure member (7) integrated in the area of the piston step (3) such that, under the action of the second spring (6), the closure member (7) in the slip-free normal braking mode permits free flow of pressure fluid from the master cylinder to the wheel brake, in that the first piston (1), in the phase of pressure reduction during an anti-lock control mode, moves in opposition to the second spring (6) due to the difference in pressure between the wheel brake and the outlet valve, whereby the closure member (7), under the action of the first spring (5), closes the valve seat (15) provided within the piston step (3), whereby a throttle (16) is effective, and in that the wheel cylinder pressure acting on the piston step (3) displaces the second piston (4) in opposition to the effect of a control spring (8), a control edge (19) of the second piston (4) controlling the pressure fluid return flow to the outlet valve as a result.

2. A braking pressure control device as claimed in claim 1,
**characterized** in that the closure member (7) integrated in the area of the piston step (3) is positioned directly by the first spring (5) of low stiffness.

3. A braking pressure control device as claimed in claim 1 or 2,
**characterized** in that the second spring (6), which is of greater stiffness compared to the first spring (5), is held in the second piston (4) in opposition to the direction of effect of the first spring (5).

4. A braking pressure control device as claimed in any one of the preceding claims,
**characterized** in that the piston step (3) on the larger front-face piston surface is acted upon by a control spring (8) movable into abutment on the valve housing (2).

5. A braking pressure control device as claimed in claim 4,
**characterized** in that the control spring (8) is made of a shape-memory alloy or any bimetal.

6. A braking pressure control device as claimed in at least one of the preceding claims,
**characterized** in that a connecting channel (9) to the wheel brake is located in an area of transition from the large diameter portion to the small diameter portion of the piston step (3).

7. A braking pressure control device as claimed in any one of the preceding claims,
**characterized** in that the piston step (3) receives the connecting channel (10) leading to the master cylinder in the area of the large diameter portion.

## Revendications

1. Dispositif de régulation de pression de freinage, notamment pour véhicule automobile comportant un système de régulation antiblocage (ABS) et/ou un système de régulation du glissement de traction (ASR), ce dispositif, qui fonctionne avec un fluide servant d'agent de pression, notamment un agent hydraulique de pression, étant constitué d'un maître-cylindre, d'un ou plusieurs cylindres de roue, associés à des freins de roue, d'un modulateur de pression, qui comporte plusieurs éléments à fonction de valve et sert à modifier la pression hydraulique dans les cylindres de roue des £reins de roue en mode de régulation de la pression de freinage et qui comprend au moins une valve d'entrée et au moins une valve de sortie associée à un cylindre de roue, d'au moins une pompe, entraînée par un moteur et servant à produire une pression de fluide, notamment une pression hydraulique, et d'un régulateur électronique, tandis que, dans le modulateur de pression, il est prévu un dispositif de commutation, à fonctionnement de préférence hydraulique, qui, lors de l'ouverture de la valve de sortie en mode de régulation et sous l'effet de la diminution de pression se produisant dans la conduite de sortie du cylindre de roue, ferme la valve d'entrée et fait entrer en action un élément d'étranglement situé dans la conduite d'entrée menant au cylindre de roue, caractérisé en ce qu'un premier piston (1) est guidé à l'intérieur d'un second piston étagé (4) qui est monté coulissant vis-à-vis du boîtier de valve (2) et qui est pourvu d'une partie étagée (3), tandis que deux ressorts (5, 6), fixés dans le second piston (4), sont disposés au contact du premier piston (1) et d'un obturateur (7) intégré dans la zone de la partie étagée (3) d'une façon telle que, sous l'action du second ressort (6), l'obturateur (7) autorise, en mode de freinage normal sans glissement, un écoulement libre de l'agent de pression du maître-cylindre au frein de roue, en ce que, dans la phase de suppression de pression d'un mode de régulation antiblocage et sous l'effet de la différence de pression entre le frein de roue et la valve de sortie, le premier piston (1) est déplacé à l'encontre de l'action du second ressort (6), de sorte que, sous l'action du premier ressort (5), l'obturateur (7) assure une obturation sur le siège de valve (15) prévu à l'intérieur de la partie étagée (3), ce qui fait entrer en action un étranglement (16), et en ce que la pression du cylindre de roue qui exerce son action sur la partie étagée (3), déplace le second piston (4) à l'encontre de l'action d'un ressort de régulation (8), de sorte qu'une arête de régulation (19) du second piston (4) assure la régulation de l'écoulement de retour de l'agent de pression en direction de la valve de sortie.

2. Dispositif de régulation de pression de freinage selon la revendication 1, caractérisé en ce que l'obturateur (7) intégré dans la zone de la partie étagée (3) est positionné directement dans le premier ressort (5), qui possède une plus faible raideur.

3. Dispositif de régulation de pression de freinage selon la revendication 1 ou 2, caractérisé en ce que le second ressort (6), possédant une raideur supérieure à celle du premier ressort (5), est maintenu dans le second piston (4) dans un sens opposé à la direction d'action du premier ressort (5).

4. Dispositif de régulation de pression de freinage selon l'une des revendications précédentes, caractérisé en ce que la partie étagée (3) du piston est soumise, sur la surface frontale du piston la plus grande, à l'action d'un ressort de régulation (8) agencé de façon à pouvoir prendre appui sur le boîtier de valve (2).

5. Dispositif de régulation de pression de freinage selon la revendication 4, caractérisé en ce que le ressort de régulation (8) est réalisé en un alliage à mémoire de forme ou en un produit pour bilame.

6. Dispositif de régulation de pression de freinage selon au moins l'une des revendications précédentes, caractérisé en ce qu'un conduit (9) de liaison avec le frein de roue est disposé dans la zone de transition de la partie cylindrique de plus grand diamètre à la partie cylindrique de plus petit diamètre de la partie étagée (3).

7. Dispositif de régulation de pression de freinage selon l'une des revendications précédentes, caractérisé en ce que la partie étagée (3) reçoit, dans la zone de la partie cylindrique de plus grand diamètre, le conduit (10) de liaison avec le maître-cylindre.
